Europäisches Patentamt

European Patent Office

Office européen des brevets

(19)

(11) Numéro de publication : **0 473 501 A1**

(12)

# DEMANDE DE BREVET EUROPEEN

(21) Numéro de dépôt : **91402303.1**

(51) Int. Cl.<sup>5</sup> : **H04L 12/56**

(22) Date de dépôt : **23.08.91**

(30) Priorité : **28.08.90 FR 9010706**

(43) Date de publication de la demande :
**04.03.92 Bulletin 92/10**

(84) Etats contractants désignés :
**BE DE ES GB IT NL**

(71) Demandeur : **THOMSON-CSF**
**51, Esplanade du Général de Gaulle**
**F-92800 Puteaux (FR)**

(72) Inventeur : **Leducq, Christine**
**THOMSON-CSF SCPI Cédex 67**
**F-92045 Paris la Défense (FR)**

(74) Mandataire : **Lincot, Georges et al**
**THOMSON-CSF SCPI**
**F-92045 PARIS LA DEFENSE CEDEX 67 (FR)**

(54) **Procédé et dispositif pour comptage de trafic dans un réseau de commutation rapide par paquets.**

(57)    Le procédé selon l'invention pour le comptage de trafic dans un réseau de commutation rapide par paquets (1) comportant un nombre de noeuds quelconque consiste :
— à attribuer à chaque paquet un identifiant (2)
— à affecter à chaque identifiant (2) une mémoire d'index (3) et un numéro de compteur (4) pour la totalisation des nombres paquets transitant dans chacun des noeuds.
Application : réseau de commutation.

# FIG.2

EP 0 473 501 A1

La présente invention concerne un procédé et un dispositif pour le comptage de trafic dans un réseau de commutation rapide par paquets.

Elle s'applique notamment à la reconnaissance de la répartition du trafic à l'intérieur de réseaux maillés comportant un nombre de noeuds quelconque.

La répartition des communications dans un réseau a lieu généralement en affectant aux usagers des crédits qui coupent l'accès des usagers au réseau lorsque ceux-ci ont épuisé leurs crédits de façon à permettre au réseau d'acheminer les communications des autres usagers.

Cependant cette disposition n'est pas suffisante pour rendre compte de l'état d'occupation de toutes les mailles d'un réseau qui peuvent dans certaines configurations rester inactives, et ne donne pas la possibilité de reconfigurer les chemins conduisant les communications dans le réseau pour une meilleure occupation des mailles qui le constituent.

Le but de l'invention est de pallier l'inconvénient précité.

A cet effet, l'invention a pour objet un procédé pour le comptage de trafic dans un réseau de commutation rapide par paquets comportant un nombre de noeuds quelconque caractérisé en ce qu'il consiste :
- à attribuer à chaque paquet un identifiant
- à affecter à chaque identifiant une mémoire d'index et un numéro de compteur pour la totalisation des nombres paquets transitant dans chacun des noeuds.

D'autres caractéristiques et avantages de l'invention apparaîtront ci-après à l'aide de la description qui suit faite en regard des figures annexées qui représentent :
- La figure 1 un réseau maillé selon l'invention.
- La figure 2 une illustration du procédé de comptage de trafic selon l'invention.
- La figure 3 un mode de mise en oeuvre du procédé selon l'invention.

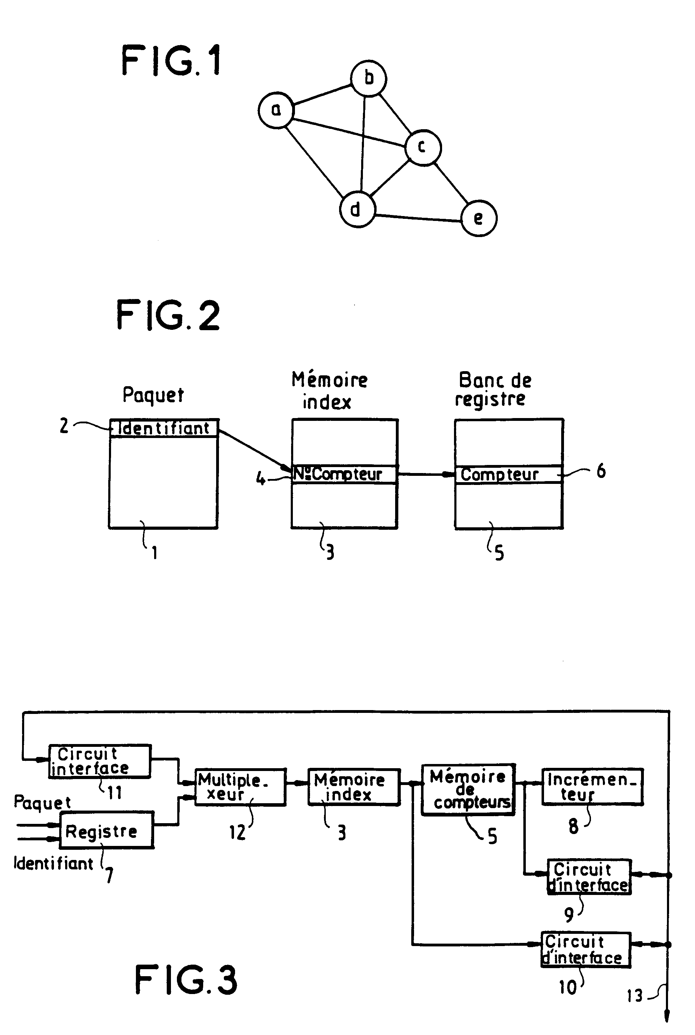

Dans un réseau de communication tel que représenté schématiquement à la figure 1 la matrice de commutation est établie pour chaque usager en mettant en relation sur un chemin de communication des noeuds émetteurs et récepteurs (a, b, c, d, e). Plusieurs matrices peuvent ainsi être établies simultanément en fonction notamment du type de service, de la zone géographique et des utilisateurs...

Comme le montre la figure 2, le procédé selon l'invention adjoint à chaque paquet ou cellule d'information 1, un identifiant 2 pour aiguiller le paquet d'une direction entrante vers une direction sortante lors de la commutation. D'autre part, à cet identifiant est affecté grâce à une mémoire d'index 3, un numéro de compteur 4 qui pointe dans une mémoire de compteurs 5 un compteur 6 à activer.

Lors du transfert d'un paquet à l'intérieur d'un noeud (a, b, c, ... ) sur la figure 1, l'identifiant du paquet est lu et sert de pointeur dans la mémoire d'index 3 pour désigner un numéro de compteur 4.

Le contenu du compteur correspondant est extrait de la mémoire 5 et est mis à jour. La nouvelle valeur du compteur ainsi obtenue est ensuite rechargée dans la mémoire 5 au même emplacement pour pouvoir être éventuellement utilisée pour un prochain comptage.

Un dispositif superviseur non représenté peut ainsi relever les contenus des compteurs 5, afin d'établir périodiquement la ligne de la matrice. Pour que la période de relevé ne soit pas trop petite, les compteurs doivent naturellement avoir une profondeur suffisante.

Le dispositif superviseur peut aussi avoir accès à la mémoire d'index 3 pour programmer la relation identifiant/numéro de compteur. Cette programmation est naturellement modifiable à tout instant en cours de fonctionnement.

Un mode de réalisation d'un dispositif pour la mise en oeuvre du procédé selon l'invention est représenté à la figure 3 où les éléments homologues à ceux de la figure 2 sont représentés avec les mêmes références. Il comporte en plus des éléments homologues de la figure 2 formés par la mémoire d'index 3 et la mémoire de compteurs 5, un registre 7 de mémorisation de l'identifiant du paquet qui est appliqué au réseau, un registre incrémenteur d'une unité 8, des circuits d'interface 9, 10 et 11 et un circuit multiplexeur 12. Les circuits 9, 10, 11 assurent respectivement, une interface entre un bus superviseur 13 relié à un processeur extérieur non représenté, avec la mémoire de compteurs 5, la mémoire d'index 3 et une première entrée du multiplexeur 12. La deuxième entrée du multiplexeur 12 et sa sortie sont reliées respectivement au registre 7 et à l'entrée d'adressage de la mémoire d'index 3. La sortie des données de la mémoire d'index 3 transmet les numéros de compteur d'une part, sur l'entrée d'adressage de la mémoire 5 et d'autre part, sur le bus superviseur 13 par l'intermédiaire du circuit d'interface 10.

La sortie de données de la mémoire 5 est reliée d'une part, sur des entrées parallèles du registre incrémenteur 8 et d'autre part, au bus superviseur 13 par l'intermédiaire du circuit d'interface 9.

Suivant le mode de réalisation de la figure 3 il n'est pas nécessaire que la mémoire d'index 3 soit située sur le même support physique que les autres éléments qui lui sont associées, et suivant d'autres modes de réalisation 11 pourra être prévu de répartir des mémoires d'index à l'intérieur même de chaque noeud du réseau.

Egalement le procédé de comptage selon l'invention reste applicable dans son principe à tous types de paquets ou cellules que ceux-ci soient de longueur fixe ou variable. Dans le cas de paquets ou de cellules de longueur fixe, la valeur à ajouter aux compteurs correspondants est toujours la même et la bande passante utilisée peut de la sorte être comptée en nombre d'octets ou de bits soit en nombre de paquets ou cellules ; la correspondance pouvant être faite à un rapport de division près. Dans le cas de paquets ou de cellules de longueur variable, la longueur du paquet ou de la cellule pourra être soit codée dans l'en-tête, soit déterminée par un motif de fin. Il est alors possible de connaître, en octets ou en bits, la longueur de chaque paquet ou cellule et d'incrémenter le compteur correspondant de cette longueur qui est naturellement variable d'un paquet ou d'une cellule à l'autre.

**Revendications**

1. Procédé pour le comptage de trafic dans un réseau de commutation rapide par paquets (1) comportant un nombre de noeuds quelconque caractérisé en ce qu'il consiste :
   - à attribuer à chaque paquet un identifiant (2)
   - à affecter à chaque identifiant (2) une mémoire d'index (3) et un numéro de compteur (4) pour la totalisation des nombres de paquets transitant dans chacun des noeuds.

2. Procédé selon la revendication 1 caractérisé en ce que le numéro de compteur (4) est utilisé comme pointeur d'une mémoire de compteurs (5).

3. Procédé selon la revendication 2 caractérisé en ce que les contenus des compteurs de la mémoire (5) sont mis à jour à chaque pointage de l'identifiant correspondant dans la mémoire d'index (3).

4. Dispositif pour la mise en oeuvre du procédé selon l'une quelconque des revendications 1 à 3 caractérisé en ce qu'il comprend une mémoire d'index (3) dans laquelle sont rangées des numéros de compteur (4), une mémoire de compteurs (5) adressée par le contenu de la mémoire d'index et un registre incrémenteur (8) pour mettre à jour le contenu de chaque emplacement mémoire compteur (5) lorsque celle-ci est adressée par la mémoire d'index (3).

5. Dispositif selon la revendication 4 caractérisé en ce que la mémoire d'index (3) et la mémoire de compteurs (5) sont couplés à un bus superviseur (13).

# FIG.1

# FIG.2

Paquet      Mémoire index      Banc de registre

Identifiant    2

N° Compteur    4

Compteur    6

1      3      5

Circuit interface    11

Paquet

Registre

Identifiant    7

Multiple_xeur    12

Mémoire index    3

Mémoire de compteurs    5

Incrémen_teur    8

Circuit d'interface    9

Circuit d'interface    10    13

# FIG.3

4

Office européen
des brevets

**RAPPORT DE RECHERCHE EUROPEENNE**

Numero de la demande

EP   91 40 2303

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-9 000 331 (BELL TELEPHONE MANUFACTURING CO.) <br> * Page 8, lignes 1-13; page 11, lignes 8-17; page 12, lignes 17-30; figures 1,2,3 * <br> --- | 1-5 | H 04 L   12/56 |
| A | ISSLS'88, Boston, MA, 11-16 septembre 1988, pages 240-245, IEEE, New York, US; W. KOWALK et al.: "The "policing function" to control user access in ATM networks - Definition and implementation" <br> * Page 244, colonne de droite, lignes 17-41; figure 5 * <br> --- | 1-5 | |
| A | EP-A-0 293 315 (ETAT FRANCAIS) <br> * Colonne 2, lignes 5-13,45-61; figure 5 * <br> --- | 1-5 | |
| A | WO-A-8 806 822 (D.E.C.) <br> * Page 3, ligne 28 - page 4, ligne 10 * <br> ----- | 1-5 | |

**DOMAINES TECHNIQUES RECHERCHES (Int. Cl.5)**

H 04 L

Le présent rapport a été établi pour toutes les revendications

| Lieu de la recherche | Date d'achèvement de la recherche | Examinateur |
|---|---|---|
| LA HAYE | 25-11-1991 | DE LA FUENTE DEL AGUA P. |